# DEMANDE DE BREVET EUROPEEN

(11) **EP 3 351 811 A1**
(43) Date de publication de la demande: **25.07.2018**
(21) Numéro de dépôt: 18150509.0
(22) Date de dépôt: 05.01.2018
(51) Int. Cl.: F16B 7/04, F16B 3/00

(54) **KIT D'ASSEMBLAGE POUR STRUCTURES DE SUPPORT, PROCEDE D'ASSEMBLAGE ET STRUCTURES DE SUPPORT ASSEMBLEES A L'AIDE DE CE KIT D'ASSEMBLAGE**

(30) Priorité: 19.01.2017 FR 1750451
(71) Demandeur: CATTEAU, Benoît, 85140 La Merlatière (FR)
(72) Inventeur: CATTEAU, Benoît, 85140 La Merlatière (FR)
(74) Mandataire: Cabinet Chaillot

(57) **Abrégé**

Ce kit comprend au moins un premier profilé (1), au moins un second profilé et au moins un dispositif d'assemblage (5). Dans chaque profilé (1) est formée une rainure (2) ouverte, à fond cylindrique et débouchante à ses deux extrémités, la largeur de l'ouverture (3) de ladite rainure (2) étant inférieure au diamètre du fond de la rainure (2) ; et chaque dispositif (5) comprend un élément d'assemblage (6) présentant une rotule (8), reçue dans une rainure (2), et une seconde partie (9) s'étendant à partir de la rotule (8) et reçue dans l'espace de réception d'un second profilé, une clé (7) se présentant sous la forme d'un tube cylindrique creux, fendu longitudinalement, le diamètre extérieur de celle-ci (7) étant tel qu'elle peut être introduite sans jeu dans une rainure (2).

## Description

La présente invention concerne un kit d'assemblage pour des structures de support, en particulier pour des ossatures de bâtiment, ainsi qu'un procédé d'assemblage et les structures de support assemblées à l'aide de ce kit d'assemblage.

Il est intéressant de construire des structures notamment métalliques, par exemple en aluminium, à partir d'une pluralité de profilés et de pièces de liaison afin de réaliser des structures définitives, comme des maisons, ou des structures provisoires, comme des stands lors d'expositions, ou des structures que l'on peut transformer au cours du temps.

De telles structures, dans l'état actuel de la technique, présentent des inconvénients :
- les opérations de montage et de démontage de ces structures sont chronophages ;
- l'assemblage des éléments les uns aux autres s'effectue généralement par vissage et/ou boulonnage, ce qui entraîne :
   - une détérioration des éléments de la structure du fait d'avoir à réaliser de nombreux perçages et vissages, le cas échéant d'avoir à réaliser de nouveaux perçages et vissages en cas d'erreurs de pose ;
   - une garantie insuffisante, voire une absence de garantie de résistance à l'arrachement latéral dans le cas par exemple où un élément est monté perpendiculairement à un autre par vissage ;
- les solutions ou possibilités de montage des structures traditionnelles sont souvent limitées ou exigent de très nombreuses pièces si l'on veut prendre en compte la réalisation des différents angles de la structure, les réglages en longueur et angulaires des profilés ; et
- des montages et démontages souvent compliqués.

L'invention a pour but de résoudre les inconvénients cités ci-dessus en proposant un kit d'assemblage pouvant être monté et démonté rapidement et facilement, sans détérioration des éléments qui le composent, pouvant être évolutif et repris facilement en cas d'erreurs de pose, avec d'excellentes propriété mécaniques et une conservation de la rigidité de la structure résultante, et offrant de très nombreuses possibilités pour réaliser de façon simple de nombreux types de structure, tels que planchers, toitures, etc. avec les mêmes types d'éléments.

A cet effet, la présente invention a d'abord pour objet un kit d'assemblage pour structure de support, comprenant au moins un premier profilé, au moins un second profilé destiné à s'étendre perpendiculairement ou suivant un angle par rapport à un premier profilé et au moins un dispositif d'assemblage destiné à assembler une extrémité d'un second profilé à un premier profilé, le kit d'assemblage étant caractérisé par le fait que :
- dans chaque premier profilé est formée une rainure ouverte, à fond cylindrique et débouchante à ses deux extrémités, la largeur de l'ouverture de ladite rainure étant inférieure au diamètre du fond cylindrique de ladite rainure;
- chaque second profilé présente à au moins l'une de ses extrémités un espace de réception ; et
- chaque dispositif d'assemblage comprend :
   - un élément d'assemblage présentant une première partie, dite rotule, configurée pour être reçue dans la rainure d'un premier profilé, et une seconde partie s'étendant à partir de ladite rotule de façon à faire saillie hors dudit premier profilé en position d'assemblage et configurée pour être reçue dans l'espace de réception d'un second profilé et y être fixée, ladite rotule étant cylindrique avec un diamètre extérieur plus petit que la largeur de l'ouverture du premier profilé ;
   - une pièce, dite clé, se présentant sous la forme d'un tube cylindrique creux, fendu longitudinalement, le diamètre extérieur de la clé étant tel que ladite clé puisse être introduite sans jeu ou pratiquement sans jeu dans la rainure, le diamètre extérieur de la rotule étant tel que ladite rotule puisse être contenue dans la clé et la largeur maximale de la fente étant inférieure au diamètre extérieur de la rotule ;
   ledit kit comportant également une cale temporaire, laquelle se présente sous la forme d'un tube creux semi-cylindrique ou en partie de cylindre dont le diamètre extérieur est tel qu'elle peut être introduite dans la rainure d'un premier profilé pour reposer contre le fond de cette dernière et dont le diamètre intérieur est tel que la rotule puisse être reçue dans ladite cale temporaire en place dans le fond de la rainure, les dimensions de ladite cale étant également telles que, dans la position où la rotule repose sur elle, la cale peut être extraite par une extrémité du premier profilé ou par l'ouverture de celui-ci.

Ledit kit d'assemblage peut avantageusement comporter des moyens de blocage en translation et /ou en rotation de la clé dans la rainure.

Conformément à un premier mode de réalisation du kit d'assemblage selon l'invention, les moyens de blocage de la clé sont des moyens de blocage en translation et consistent en au moins une vis de serrage introduite dans un trou traversant de la clé et venant en appui contre la rotule, immobilisant alors celle-ci ainsi que la clé.

Conformément à un deuxième mode de réalisation du kit d'assemblage selon l'invention, les moyens de blocage de la clé sont des moyens de blocage en rotation, la clé comprenant deux languettes longitudinales, dites d'arrêt, s'étendant chacune vers l'extérieur dans le prolongement d'un bord longitudinal respectif de la fente de la clé, ladite fente étant alors évasée et étant par ailleurs dimensionnée de telle sorte qu'une fois la clé introduite dans la rainure d'un premier profilé, chaque languette d'arrêt est en contact avec le bord longitudinal libre d'une languette d'appui qui s'étend le long de la rainure d'un premier profilé au voisinage d'un bord supérieur correspondant de la rainure, la mise en butée de chaque languette d'arrêt sur la languette d'appui respective assurant le blocage en rotation de la clé, un pivotement de la rotule autour de son axe longitudinal à l'intérieur de la clé étant autorisé.

Selon l'invention, on peut également prévoir des moyens pour éviter des micro-mouvements entre l'élément d'assemblage et la clé d'une part et entre la clé et le premier profilé d'autre part, lesdits moyens pouvant consister en au moins un point de colle ou de silicone entre la surface extérieure de la clé et la surface extérieure de l'élément d'assemblage au voisinage de la fente pour bloquer les micro-mouvements entre l'élément d'assemblage et la clé, et/ou entre la surface extérieure de la clé et au moins une languette d'appui qui s'étend le long de la rainure d'un premier profilé au voisinage d'un bord supérieur correspondant de la rainure pour bloquer les micro-mouvements entre la clé et le premier profilé.

La largeur de la fente peut avantageusement être telle que la seconde partie de l'élément d'assemblage traverse ladite fente sans jeu ou pratiquement sans jeu en position d'assemblage.

Le kit d'assemblage selon l'invention peut comprendre en outre au moins un capot apte à venir fermer l'ouverture de la rainure d'un premier profilé dans sa partie ne comportant pas le dispositif d'assemblage, bloquant alors ce dernier en translation dans la rainure.

Par ailleurs, il peut être prévu que :
- chaque capot se présente sous la forme d'une plaque plane apte à être montée en travers de l'ouverture de la rainure d'un premier profilé, la largeur de la plaque étant légèrement inférieure à la largeur de l'ouverture de la rainure, deux pattes d'appui s'étendant vers le bas à partir de la face inférieure de la plaque, chaque patte d'appui étant située au voisinage d'une extrémité respective de la plaque ; et
- deux languettes longitudinales, dites d'appui, s'étendent le long de la rainure de chaque premier profilé, chacune au voisinage d'un bord respectif supérieur de la rainure, chaque languette d'appui présentant une face supérieure horizontale contre laquelle prend appui une patte d'appui d'un capot lorsque ce dernier est monté en travers de l'ouverture de la rainure.

La seconde partie de l'élément d'assemblage est avantageusement coudée.

Le segment de la seconde partie de l'élément d'assemblage voisin de la rotule peut avoir une ligne longitudinale moyenne perpendiculaire à ou formant un angle non droit avec l'axe longitudinal de la rotule.

La présente invention a également pour objet un procédé d'assemblage d'une structure de support à l'aide d'au moins un kit d'assemblage selon l'invention, caractérisé par le fait que :
- on prévoit au moins un premier profilé, au moins un second profilé et au moins un dispositif d'assemblage devant constituer la structure recherchée, une cale temporaire étant associée à chaque dispositif d'assemblage ;
- on place chaque cale temporaire dans la rainure du premier profilé ou dans les rainures des premiers profilés à l'emplacement où l'on veut former la liaison avec le second profilé ;
- on insère un élément d'assemblage par l'extrémité de sa seconde partie dans l'espace de réception formé à une extrémité ou à chaque extrémité du second profilé ;
- on vient faire reposer la rotule ou chaque rotule sur la cale temporaire placée dans la rainure du premier profilé ;
- on vient insérer la clé dans la rainure du premier profilé en dehors de l'endroit où se trouvent la cale temporaire et la rotule ;
- on fait coulisser la clé dans la rainure de telle sorte qu'elle vient pousser la cale temporaire et prendre la place de cette dernière sous la rotule ; et
- on fait sortir la cale temporaire par l'ouverture du premier profilé ou par l'extrémité de celui-ci ;
- le cas échéant, on vient fermer l'ouverture de la rainure par au moins un capot,
ces opérations étant recommencées pour chacune des positions d'assemblage.

La présente invention a aussi pour objet une structure de support, caractérisée par le fait qu'elle comprend une pluralité de kits d'assemblage selon l'invention, à l'état assemblé, sans la ou les cales temporaires.

La structure de support selon l'invention peut composer un plancher ou une toiture, comprenant une pluralité de premiers profilés, placés à l'horizontale, une pluralité de seconds profilés s'étendant chacun perpendiculairement ou de façon inclinée entre deux premiers profilés, et une pluralité de dispositifs d'assemblage assemblant chacun une extrémité longitudinale d'un second profilé au premier profilé respectif.

Dans ce qui précède, on entend par « pratiquement sans jeu » des jeux minimums, utiles, pour que la rotule puisse coulisser dans la clé et pour que la clé puisse coulisser dans la rainure.

A titre indicatif, les jeux entre les parois peuvent aller de 0 à 0,5 mm.

Pour mieux illustrer l'objet de la présente invention, on va en décrire ci-après, à titre indicatif et non limitatif, plusieurs modes de réalisation particuliers avec référence au dessin annexé.

Sur ce dessin :
- la Figure 1a représente une vue en perspective d'un dispositif d'assemblage selon un premier mode de réalisation de l'invention en place dans la rainure d'un premier profilé, celui-ci étant montré partiellement ;
- la Figure 1b représente, en coupe transversale, le premier profilé de la Figure 1a dans lequel est placé le dispositif d'assemblage montré dans trois positions différentes ;
- la Figure 2a représente une vue en perspective d'un dispositif d'assemblage selon un deuxième mode de réalisation de l'invention en place dans la rainure d'un premier profilé, celui-ci étant montré partiellement ;
- la Figure 2b représente, en coupe transversale, le premier profilé de la Figure 2a dans lequel est placé le dispositif d'assemblage montré dans trois positions différentes ;
- la Figure 3a représente une vue en perspective d'un dispositif d'assemblage selon un troisième mode de réalisation de l'invention en place dans la rainure d'un premier profilé, celui-ci étant montré partiellement ;
- la Figure 3b représente, en coupe transversale, le premier profilé de la Figure 3a dans lequel est placé le dispositif d'assemblage montré dans trois positions différentes ;
- les Figures 4a et 4b montrent deux premiers profilés respectivement en cours d'assemblage et assemblés avec un second profilé, le second profilé devant réunir les deux premiers profilés parallèles suivant une ligne oblique ;
- la Figure 5a montre un premier profilé en coupe ainsi que l'élément d'assemblage du dispositif d'assemblage qui est solidaire d'un second profilé et qui est dans une première position en vue de sa liaison avec le premier profilé ;
- la Figure 5b est une vue en perspective correspondant à la Figure 5a ;
- les Figures 6a-6b, 7a-7b, 8a-8b, 9a-9b sont des vues correspondant respectivement aux Figures 5a-5b montrant les différentes positions relatives entre les premier et second profilés jusqu'à leur liaison en Figures 9a-9b ;
- la Figure 10 montre, de façon plus détaillée, le second profilé qui est vu en bout et auquel est raccordé le premier profilé ;
- la Figure 11 est une vue en coupe selon XI-XI de la Figure 10 ;
- la Figure 12 représente une vue en bout seulement du second profilé des Figures 10 et 11 ;

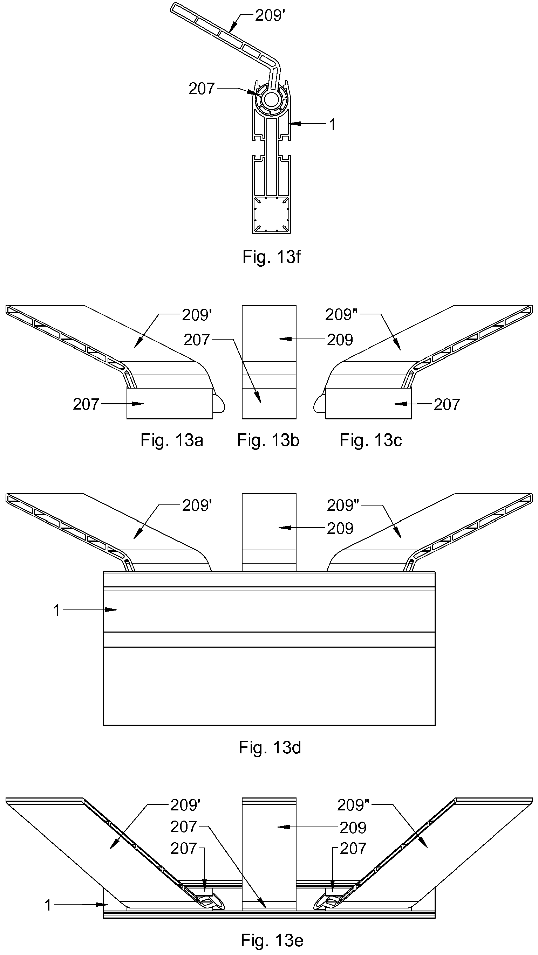

- les Figures 13a à 13c montrent chacune en perspective une variante de réalisation d'un dispositif d'assemblage, la seconde partie de l'élément d'assemblage ayant sa ligne moyenne perpendiculaire à l'axe de la rotule dudit dispositif d'assemblage (Figure 13b) ou formant un angle non droit selon deux orientations différentes (Figures 13a, 13c) ; les dispositifs d'assemblage sont ici représentés à proximité l'un de l'autre pour permettre l'explication de ces variantes, mais, selon les situations, on pourrait prévoir qu'ils soient davantage distants l'un de l'autre ou qu'il n'y ait qu'un seul d'entre eux ;
- la Figure 13d est une vue représentant les dispositifs d'assemblage des Figures 13a, 13b et 13c qui sont introduits dans un premier profilé, lequel est vu latéralement ;
- la Figure 13e est une vue correspondant à la Figure 13d avec le premier profilé vu de dessus ;
- la Figure 13f est une vue correspondant à la Figure 13d avec le premier profilé vu de face ;
- la Figure 14a est une vue schématique en perspective d'une structure ou ossature de maison pour l'assemblage de laquelle on peut utiliser des kits d'assemblage selon l'invention ;
- la Figure 14b est une vue schématique de côté de la maison de la Figure 14a ;
- la Figure 14c est une vue schématique de face de la maison de la Figure 14a ;
- la Figure 14d est une vue schématique de dessus de la maison de la Figure 14a ;
- la Figure 14e est une autre vue schématique en perspective de la maison de la Figure 14a ;
- la Figure 15 est une vue de la maison de la Figure 14a où l'on peut voir des exemples de disposition de premiers ou seconds profilés, une enveloppe extérieure étant accrochée à la structure ; sur ce dessin, A se situe au niveau d'un plancher et B et C se situent chacun au niveau d'une toiture ;
- la Figure 16 est une vue partielle de face d'un angle de plancher A de la structure de maison de la Figure 14a ;
- la Figure 17 est une vue partielle de dessus d'un angle de plancher A de la structure de maison de la Figure 14a ;
- la Figure 18 est une vue partielle de profil d'un angle de plancher A de la structure de maison de la Figure 14a ;
- la Figure 19 est à plus grande échelle une vue correspondant au détail XIX de la Figure 17 ;
- la Figure 20 est à plus grande échelle une vue correspondant au détail XX de la Figure 17 ;
- la Figure 21 est à plus grande échelle une vue correspondant au détail XXI de la Figure 18 ;
- la Figure 22 est à plus grande échelle une vue correspondant au détail XXII de la Figure 18 ;
- la Figure 23 est une vue partielle en perspective éclatée de l'angle de plancher de la Figure 16 ;
- la Figure 24 est une vue en perspective de l'angle de plancher de la Figure 16 ;
- la Figure 25 est une vue partielle de face d'un angle de toiture B de la structure de maison de la Figure 14a ;
- la Figure 26 est une vue partielle de dessus d'un angle de toiture B de la structure de maison de la Figure 14a ;
- la Figure 27 est une vue partielle de profil d'un angle de toiture B de la structure de maison de la Figure 14a ;
- la Figure 28 est à plus grande échelle une vue correspondant au détail XXVIII de la Figure 26 ;
- la Figure 29 est à plus grande échelle une vue correspondant au détail XXIX de la Figure 26 ;
- la Figure 30 est à plus grande échelle une vue correspondant au détail XXX de la Figure 27 ;
- la Figure 31 est à plus grande échelle une vue correspondant au détail XXXI de la Figure 25 ;
- la Figure 32 est une vue partielle en perspective éclatée de l'angle de plancher de la Figure 25 ;
- la Figure 33 est une vue en perspective de l'angle de plancher de la Figure 25 ;
- la Figure 34 est une vue de face de l'angle de toiture C de la structure de maison de la Figure 14a ;
- la Figure 35 est une vue de dessus de l'angle de toiture C de la structure de maison de la Figure 14a ;
- la Figure 36 est à plus grande échelle une vue correspondant au détail XXXVI de la Figure 35 ;
- la Figure 37 est à plus grande échelle une vue correspondant au détail XXXVII de la Figure 35 ;
- la Figure 38 est une vue en perspective de l'angle de toiture C de la structure de maison de la Figure 14a ;
- la Figure 39 est à plus grande échelle une vue correspondant au détail XXXIX de la Figure 38 ;
- la Figure 40 est à plus grande échelle une vue correspondant au détail XL de la Figure 38.

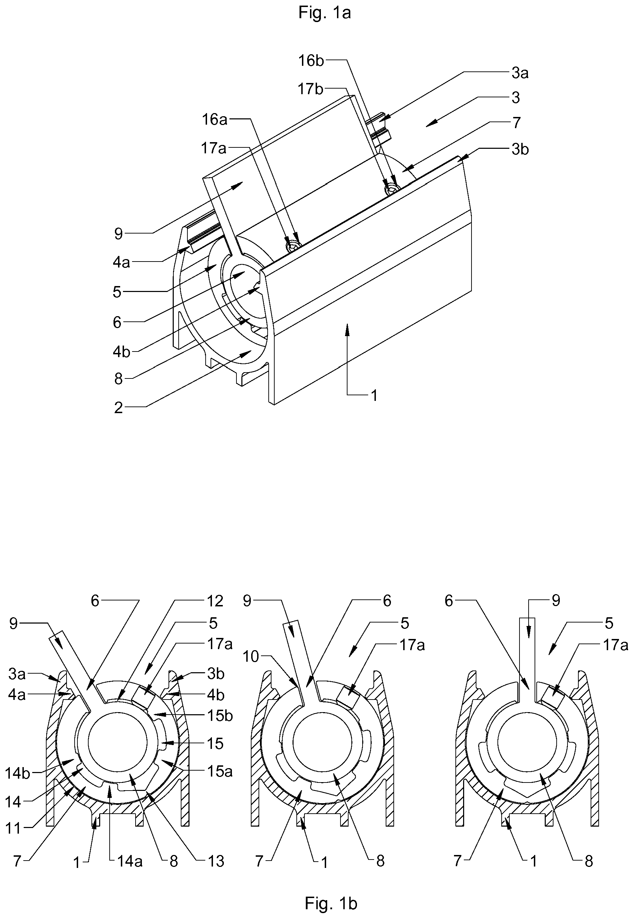

Si l'on se réfère aux Figures 1a et 1b, on peut voir que l'on a représenté un premier mode de réalisation d'un dispositif d'assemblage et d'un premier profilé appartenant à un kit d'assemblage de la présente invention.

Le kit d'assemblage possède un premier profilé 1 de section tubulaire, en aluminium. Sur les Figures 1a et 1b, seule la partie supérieure du premier profilé 1 est représentée. Le premier profilé 1 présente une rainure 2 à fond cylindrique débouchant sur ses deux extrémités. Le premier profilé 1 possède une ouverture 3 entre les deux bords 3a et 3b de la rainure. Au voisinage des bords de l'ouverture 3, se trouvent des languettes longitudinales, dites d'appui, 4a et 4b. Les languettes d'appui 4a et 4b possèdent une face supérieure parallèle au plan de l'ouverture et un bord longitudinal libre incliné.

Le kit d'assemblage possède également un premier dispositif d'assemblage 5. Le dispositif d'assemblage 5 possède un élément d'assemblage 6 et une clé 7. L'élément d'assemblage 6 possède une première partie 8, dite rotule, configurée pour être reçue dans la clé 7 et une seconde partie 9 s'étendant à partir de ladite rotule 8 de façon à faire saillie hors du premier profilé 1. La seconde partie 9 est configurée pour être reçue dans l'espace de réception d'un second profilé et y être fixée.

La rotule 8 est de section cylindrique et le rayon de la rotule est tel que la rotule peut être insérée dans la rainure 2 en passant entre les deux languettes d'appui 4a et 4b au voisinage des bords 3a et 3b de l'ouverture 3 du profilé 1. La rotule 8 est évidée en son centre.

Le dispositif d'assemblage 5 possède également une clé 7. La clé 7 est un tube sensiblement cylindrique présentant une fente 10 sur toute sa longueur. La clé 7 possède une surface extérieure 11 dont le rayon est sensiblement identique au rayon du fond cylindrique de la rainure 2. La surface extérieure 11 vient en contact avec les languettes 4a et 4b du premier profilé 1. La clé possède une surface intérieure 12 qui possède une partie de faîte 13 diamétralement opposée à la fente 10, ainsi que deux cavités 14 et 15. Les cavités 14 et 15 sont séparées de la partie de faîte 13 par deux plots respectifs 14a et 15a et du reste de la surface intérieure 12 par les plots respectifs 14b et 15b. Le rayon de la surface intérieure 12 formé par les plots est sensiblement similaire au rayon de la rotule 8 de l'élément d'assemblage 6. La clé 7 possède également deux trous traversants 16a et 16b qui permettent de faire passer des vis de serrage respectivement 17a et 17b à travers ceux-ci. Les trous de serrage sont placés sur la clé de telle sorte que l'on peut avoir accès à ces derniers par l'ouverture 3 du premier profilé 1. La clé 7 est insérée dans la rainure 2 du profilé 1 par l'un des débouchés de ce dernier à l'une de ses extrémités.

En position d'assemblage la rotule 8 est insérée à l'intérieur de la clé 7, la seconde partie 9 de l'élément d'assemblage 6 passant à travers la fente 10 de ladite clé 7. On peut resserrer les vis de serrage 17a et 17b afin de mettre en pression la rotule 8 contre la surface intérieure 12 de la clé 7, ce qui permet par déformation de celle-ci de mettre en pression la surface extérieure 11 de la clé contre la paroi de la rainure 2. En faisant de la sorte, on va supprimer les jeux de l'assemblage et bloquer en translation le dispositif d'assemblage 5 formé de l'élément d'assemblage 6 et de la clé 7. De plus, ce vissage permet également de faciliter la mise en oeuvre du kit d'assemblage, notamment lors de la pose de ce kit d'assemblage en empêchant les micro-mouvements intempestifs.

En position d'assemblage, le dispositif d'assemblage 5 peut prendre divers angles dont certains sont montrés dans la Figure 1b. Par exemple, le dispositif d'assemblage 5 peut être positionné de telle sorte que la seconde partie 9 de l'élément d'assemblage 6 vient reposer sensiblement contre le bord 3a de l'ouverture 3 du premier profilé 1. Le dispositif d'assemblage 5 peut être positionné de telle sorte que la seconde partie 9 de l'élément d'assemblage 6 fait saillie perpendiculairement au plan de l'ouverture 3. Entre ces deux positions extrêmes, représentant une amplitude de 30°, toutes les autres positions sont possibles. Il sera bien évidemment entendu que, selon les possibilités d'accès pour le vissage, la seconde partie 9 de l'élément d'assemblage 6 peut venir en butée contre le bord 3b du profilé 1 en insérant la clé dans le sens inverse à celui où la seconde partie 9 vient en butée contre le bord 3a.

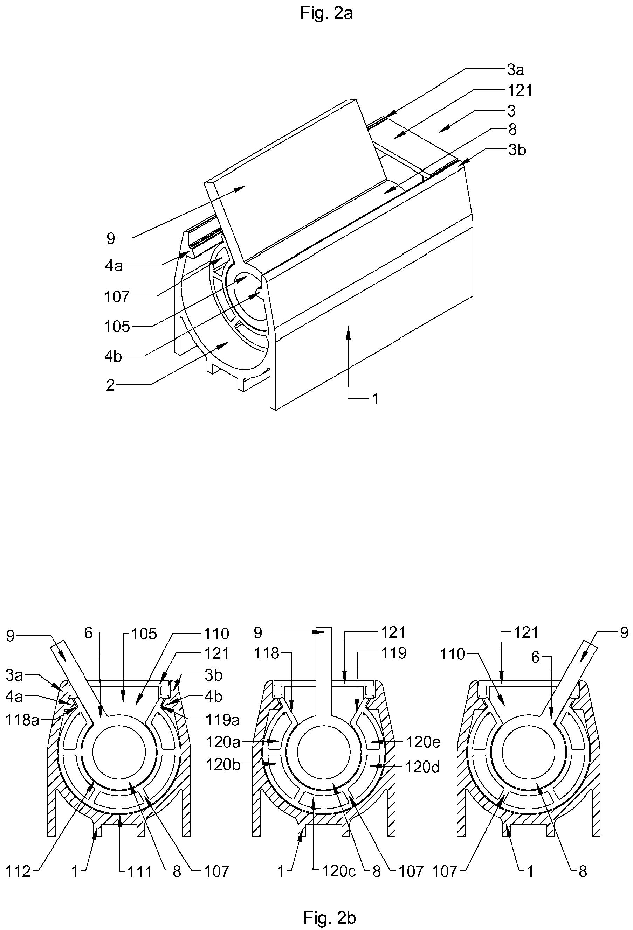

Si l'on se réfère aux Figures 2a et 2b, on peut voir que l'on a représenté un deuxième mode de réalisation d'un dispositif d'assemblage appartenant à un kit d'assemblage selon la présente invention.

Le premier profilé 1 est identique à celui utilisé dans le premier mode de réalisation, les mêmes chiffres de référence désignant les mêmes pièces. Le kit d'assemblage possède un premier dispositif d'assemblage 105 qui possède un élément d'assemblage 6 identique à celui utilisé dans le premier mode de réalisation et une clé 107. L'élément d'assemblage 6 étant identique à celui décrit dans le premier mode de réalisation, il ne sera pas décrit plus en détail.

La clé 107 est un tube sensiblement cylindrique présentant une fente 110 évasée sur toute sa longueur. La fente 110 permettra de faire passer la seconde partie 9 de l'élément d'assemblage 6. La clé 107 possède une surface extérieure 111 dont le rayon est sensiblement identique au rayon du fond cylindrique de la rainure 2. La surface extérieure 111 vient en butée contre les bords longitudinaux libres inclinés des languettes d'appui 4a et 4b du premier profilé 1. La clé 107 possède une surface intérieure 112 configurée pour recevoir la rotule 8 de l'élément d'assemblage 6.

Au niveau de la fente 110, la clé 107 possède deux faces de contact 118 et 119. Dans le prolongement des surfaces de contact 118 et 119, des languettes longitudinales d'arrêt respectives 118a et 119a font saillie de la surface extérieure 111 de la clé 107. Les languettes d'arrêt 118a et 119a viennent respectivement en contact contre les bords libres longitudinaux des languettes d'appui 4a et 4b du premier profilé 1. La clé 107 est insérée dans la rainure 2 du profilé 1 par l'un des débouchés de ce dernier à l'une de ses extrémités. La clé est creuse et possède cinq cavités 120a, 120b, 120c, 120d et 120e, d'autres nombres de cavités étant également possibles, par exemple six, afin de rendre minimal le poids de la clé 107.

La clé 107 est bloquée en rotation dans la rainure 2 du profilé 1 grâce au contact entre les languettes d'arrêt 118a et 119a et les languettes d'appui respectives 4a et 4b du profilé 1. Afin de bloquer en translation la clé 107 et donc le dispositif d'assemblage 105, on vient placer un capot de blocage 121 dans l'ouverture 3 du premier profilé pour maintenir la position longitudinale de la liaison. Le capot de blocage 121 possède des pattes d'appui qui coopéreront avec les languettes d'appui 4a et 4b du premier profilé afin de réaliser une fermeture appropriée de la rainure 2.

En position d'assemblage, la rotule 8 est insérée à l'intérieur de la clé 107, la seconde partie 9 de l'élément d'assemblage 6 passant à travers la fente 110 de ladite clé 107.

En position d'assemblage, le dispositif d'assemblage 105 peut prendre divers angles dont certains sont montrés sur la Figure 2b. Par exemple, le dispositif d'assemblage 105 peut être positionné de telle sorte que la seconde partie 9 de l'élément d'assemblage 6 vient sensiblement reposer contre la face d'appui 118 de la clé 107 et le bord 3a de l'ouverture 3 du profilé 1. A l'opposé, la seconde partie 9 de l'élément d'assemblage 6 vient sensiblement reposer contre la face d'appui 119 de la clé 107 et le bord 3b de l'ouverture 3 du profilé 1. Entre ces deux positions extrêmes, représentant une amplitude de 60°, toutes les autres positions sont possibles. Une position possible est notamment celle où la seconde partie 9 de l'élément d'assemblage fait saillie du premier profilé de façon perpendiculaire au plan de l'ouverture 3.

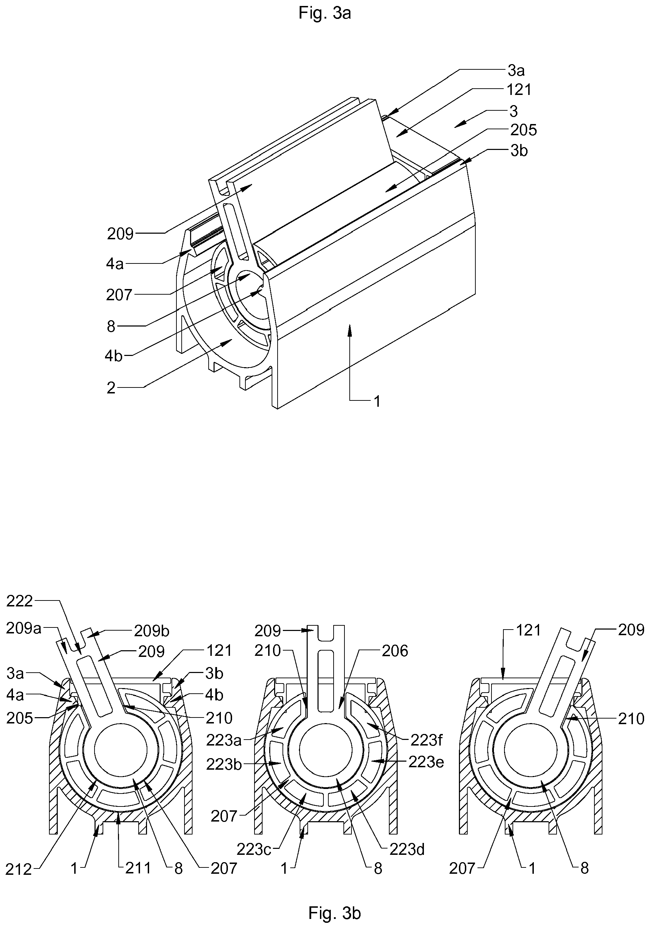

Si l'on se réfère désormais aux Figures 3a et 3b, on peut voir que l'on a représenté un troisième mode de réalisation d'un kit d'assemblage selon la présente invention.

Le premier profilé 1 est identique à celui utilisé dans les deux premiers modes de réalisation, les mêmes chiffres de référence désignant les mêmes pièces.

Le kit d'assemblage possède un premier dispositif d'assemblage 205 qui possède un élément d'assemblage 206 et une clé 207. L'élément d'assemblage 206 possède une rotule 8 identique à celle des modes de réalisation précédents et une seconde partie 209 s'étendant à partir de ladite rotule 8 de façon à faire saillie hors du premier profilé 1. La seconde partie 209 est configurée pour être reçue dans l'espace de réception d'un second profilé et y être fixée. La seconde partie 209 diffère de la seconde partie 9 des modes de réalisation précédents en ce que la seconde partie 209 possède deux toiles 209a et 209b faisant saillie de ladite rotule 8. Chaque toile est reliée l'une à l'autre par au moins une entretoise 222.

La clé 207 est un tube sensiblement cylindrique présentant une fente 210 sur toute sa longueur. La fente 210 permettra de faire passer la seconde partie 209 de l'élément d'assemblage 206. La clé 207 possède une surface extérieure 211 dont le rayon est sensiblement identique au rayon du fond cylindrique de la rainure 2. La surface extérieure 211 est en contact avec les languettes 4a et 4b du premier profilé 1. La clé 207 possède une surface intérieure 212 configurée pour recevoir la rotule 8 de l'élément d'assemblage 206. La clé est creuse et possède six cavités 223a, 223b, 223c, 223d, 223e et 223f, d'autres nombres de cavité étant possibles, par exemple cinq. Ceci permet de réduire le poids de la clé 207.

Le dispositif d'assemblage 205 est bloqué en position d'assemblage dans la rainure 2 par fermeture de l'ouverture 3 du profilé par un capot de blocage 121, identique à celui utilisé dans le mode de réalisation précédent.

En position d'assemblage, la rotule 8 est insérée à l'intérieur de la clé 207, la seconde partie 209 de l'élément d'assemblage 206 passant à travers la fente 210 de ladite clé 207.

En position d'assemblage, le dispositif d'assemblage 205 peut prendre divers angles dont certains sont montrés sur la Figure 3b. Par exemple, le dispositif d'assemblage 205 peut être positionné de telle sorte que la seconde partie 209 de l'élément d'assemblage 206 vient reposer contre le bord 3a de l'ouverture 3 du profilé 1. A l'opposé, la seconde partie 209 de l'élément d'assemblage 206 vient reposer contre le bord 3b de l'ouverture 3 du profilé 1. Entre ces deux positions extrêmes, représentant une amplitude de 45°, toutes les autres positions sont possibles. Une position possible est notamment celle où la seconde partie 209 de l'élément d'assemblage 206 fait saillie du premier profilé de façon perpendiculaire au plan de l'ouverture 3.

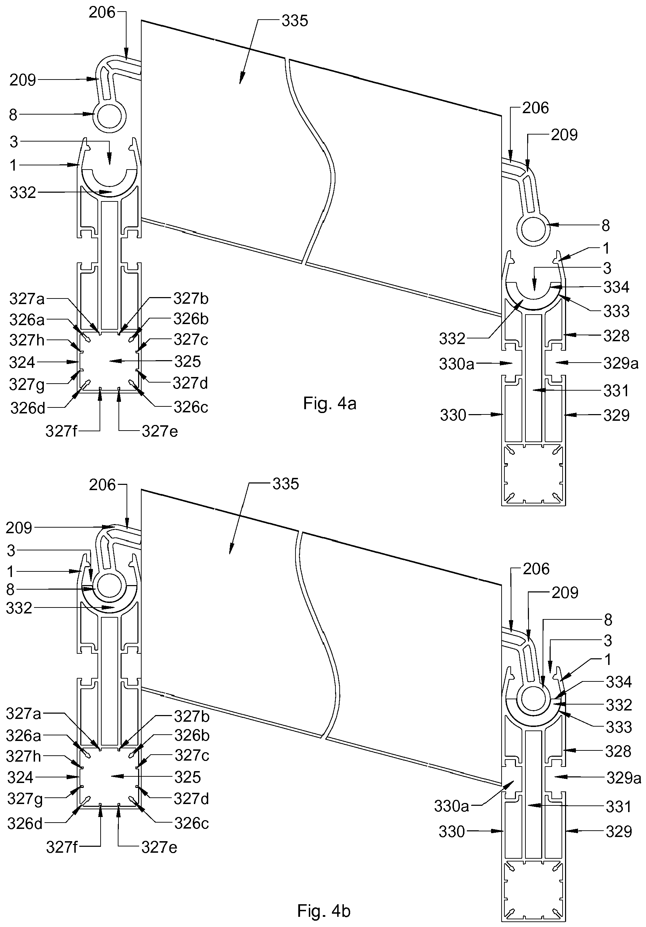

Si l'on se réfère maintenant aux Figures 4a et 4b, on peut voir que l'on a représenté l'assemblage d'un kit d'assemblage, un second profilé sensiblement incliné étant assemblé à deux premiers profilés sensiblement horizontaux à l'aide du dispositif d'assemblage 205 selon la présente invention. L'assemblage utilisant les autres dispositifs d'assemblage selon la présente invention est identique.

Le premier profilé 1 possède une première extrémité ayant une rainure cylindrique telle que décrite ci-dessus. Le premier profilé 1 possède une seconde extrémité 324 de section rectangulaire. L'extrémité de section rectangulaire possède un espace de réception intérieur 325. L'espace de réception intérieur est de section circulaire, ladite section circulaire étant formée par douze plots, dont quatre plots d'angle 326a, 326b, 326c et 326d, et huit plots de face 327a, 327b, 327c, 327d, 327e, 327f, 327g et 327h. Cette extrémité permet de recevoir un élément d'assemblage non décrit dans la présente description. Les deux extrémités sont reliées par une zone profilée 328 de section rectangulaire possédant une première face 329 et une seconde face 330 dans lesquelles sont formées respectivement une rainure 329a et une rainure 330a. Les deux faces 329 et 330 sont séparées par une cavité interne 331. Entre la cavité 331 et les rainures 329a et 330a, sont formées quatre autres cavités internes.

A l'intérieur de la rainure 2 du profilé 1, on a disposé une cale temporaire 332. La cale temporaire 332 est un tube creux semi-cylindrique dont le rayon extérieur 333 est sensiblement identique au rayon du fond cylindrique de la rainure 2 du premier profilé 1, et dont le rayon intérieur 334 est sensiblement identique au rayon de la rotule 8 d'un élément d'assemblage selon la présente invention, afin de pouvoir y recevoir la rotule 8.

Le second profilé en aluminium 335 est assemblé aux secondes parties 209 en forme de chevron des éléments d'assemblage 206. L'angle du chevron sera plus ou moins fermé en fonction de la hauteur relative des deux premiers profilés 1. Dans cet exemple, les extrémités du second profilé sont parallèles aux parois des premiers profilés et viennent en butée contre ces dernières et peuvent glisser le long de celles-ci.

Dans une première étape représentée en Figure 4a, les bords du second profilé 335 sont en butée contre les bords extérieurs des deux premiers profilés 1. Les rotules 8 de chaque élément d'assemblage sont en regard des zones de réception des cales provisoires 332 dans chaque premier profilé. On abaisse ensuite le second profilé 335 qui glisse le long des parois des premiers profilés, les rotules 8 venant se placer dans les zones de réception de chaque cale provisoire 332 (Figure 4b).

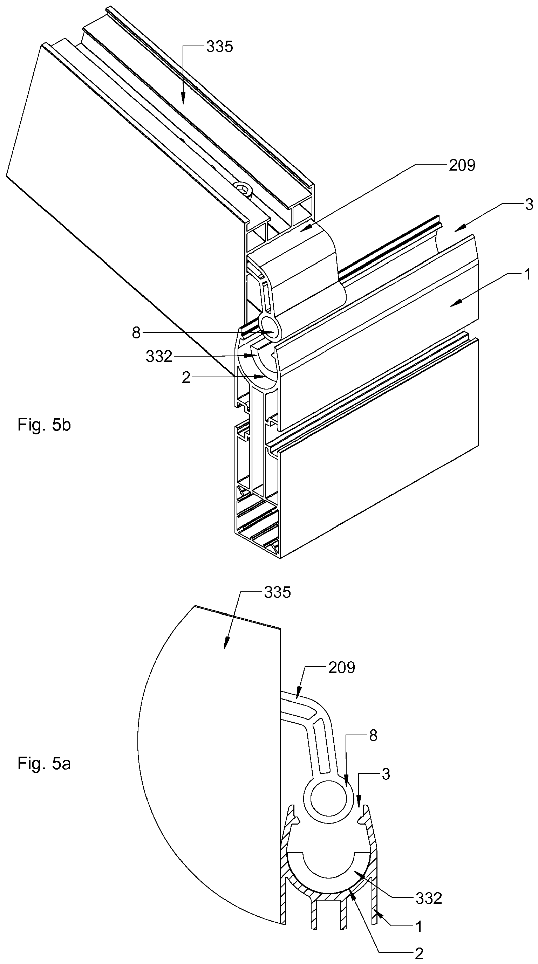

On va maintenant décrire plus en détail l'assemblage du second profilé 335 dans le premier profilé 1 en référence aux Figures 5a à 9b. On a utilisé dans cet exemple le dispositif d'assemblage 205 selon le troisième mode de réalisation, l'utilisation des autres dispositifs d'assemblage selon la présente invention étant identique.

Dans les Figures 5a et 5b, on peut voir que l'on a représenté la position de l'une des extrémités du second profilé qui est en butée contre les parois du premier profilé. La rotule 8 est alors en regard au-dessus de la zone de réception de la cale temporaire 332.

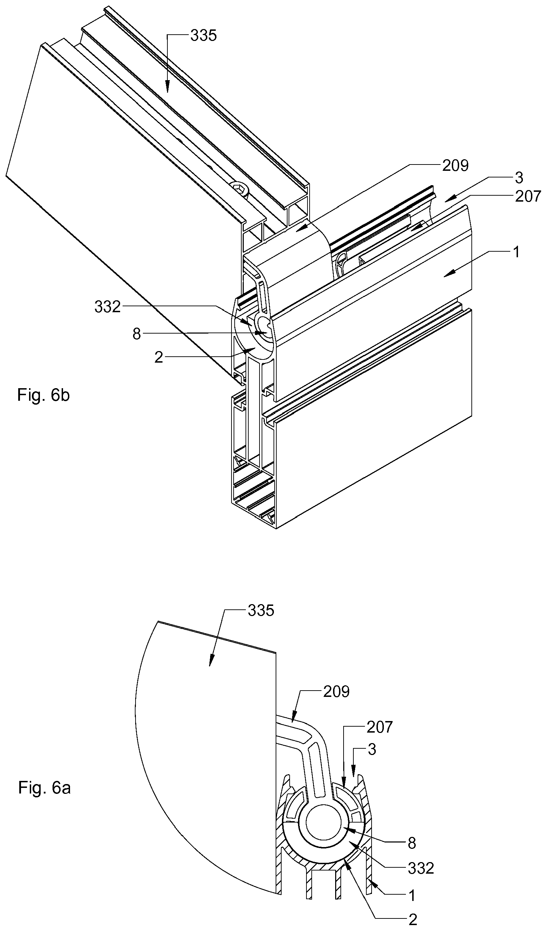

Ensuite on abaisse le second profilé 335 contre les parois du premier profilé 1 jusqu'à ce que la rotule soit posée sur la cale temporaire. Sur les Figures 6a et 6b, on a représenté la clé 207 qui avait été insérée au préalable dans la rainure 2 du premier profilé 1.

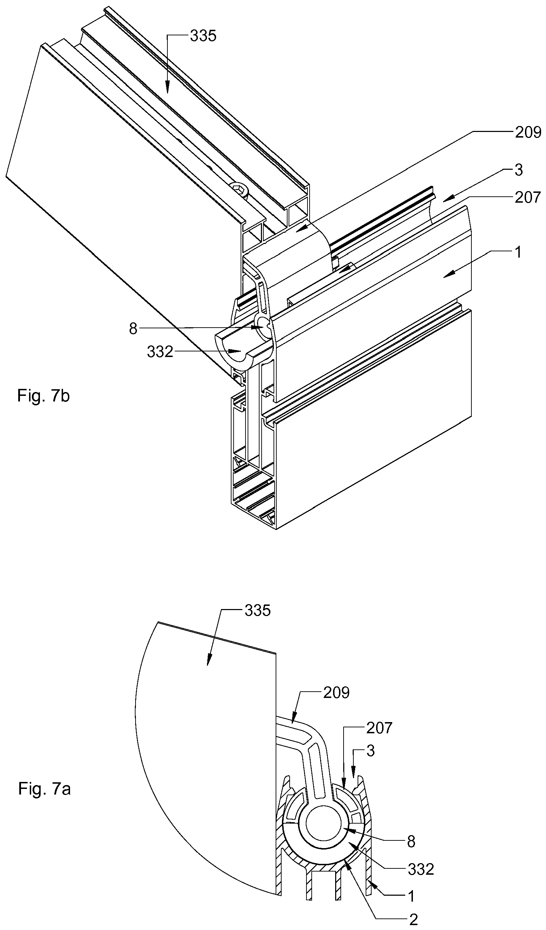

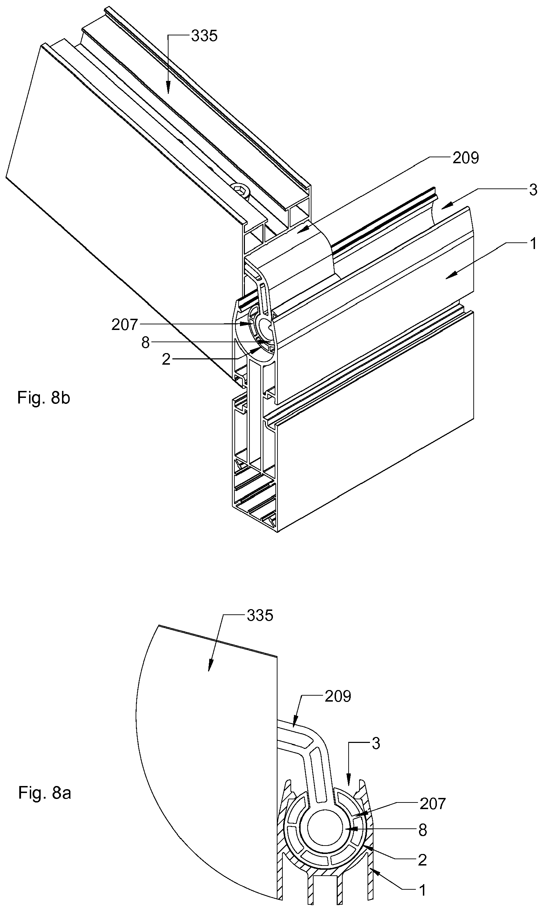

Tel que représenté dans les Figures 7a à 8b, on a représenté les déplacements par glissement successifs de la clé 207 dans la rainure 2 afin que cette dernière puisse passer sous la rotule 8 afin de pousser la cale temporaire 332 et de prendre sa place sous la rotule 8. En faisant glisser la clé 217 dans la rainure 2, celle-ci vient pousser la cale temporaire 332 (Figure 7b) jusqu'à la remplacer complètement (Figure 8b). La cale temporaire 332 peut être retirée à l'une des extrémités débouchantes du premier profilé 1. Il est également possible de retirer la cale temporaire 332 par l'ouverture 3 du premier profilé.

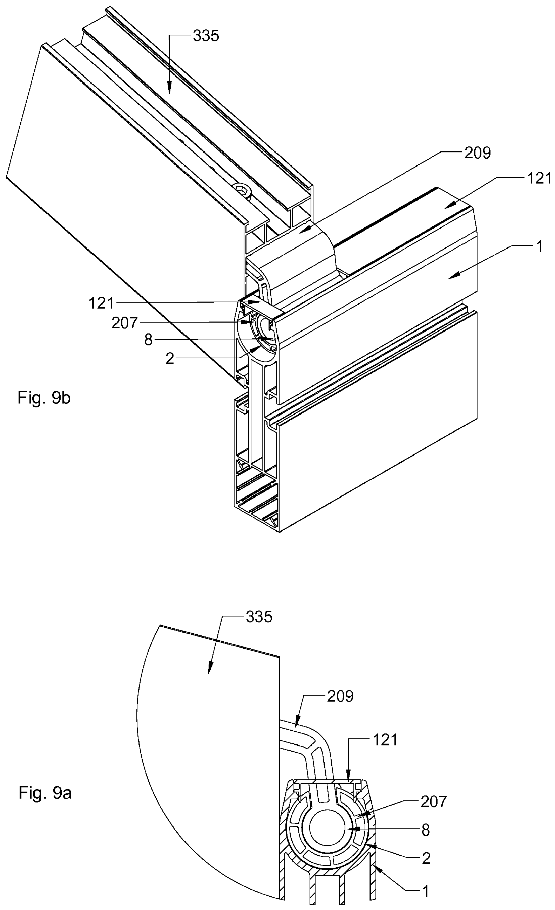

Ensuite, afin de bloquer en translation (Figures 9a et 9b) le dispositif d'assemblage 205, on vient placer de part et d'autre de la seconde partie 209 de l'élément d'assemblage 206 faisant saillie de l'ouverture 3 du premier profilé 1, des capots de blocage longitudinal 121. La rotation du dispositif d'assemblage est bloquée par la position assemblée des premier et second profilés, la butée du second profilé sur le premier empêchant tout mouvement du dispositif d'assemblage. Pour des ossatures fréquemment démontées, le maintien des positions longitudinales des liaisons peut être réalisé en déposant, entre chaque liaison, des profilés d'une section sensiblement inférieure à l'ouverture 3 au fond de cette ouverture.

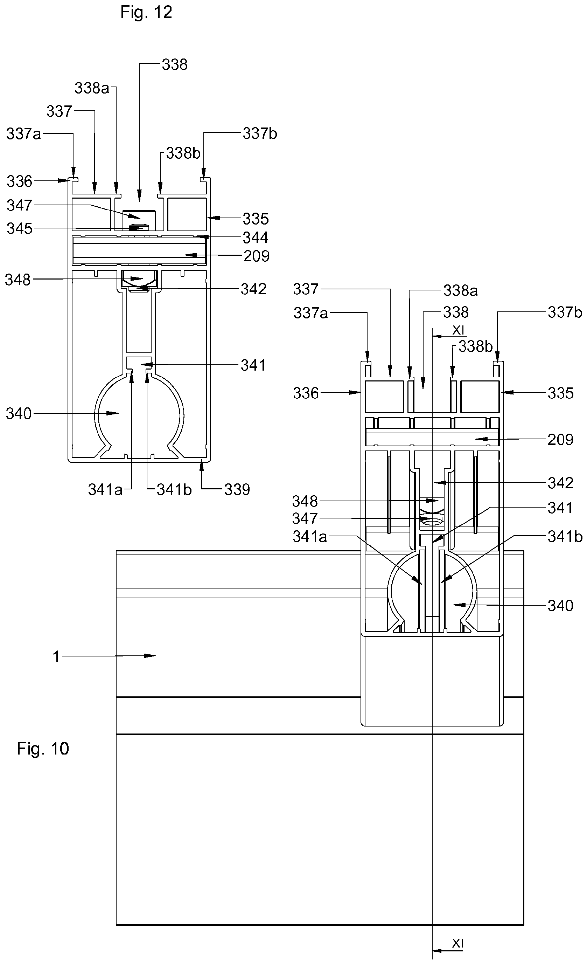

Si l'on se réfère désormais aux Figures 10 à 12, on peut voir que l'on a représenté plus en détail le montage du second profilé à la seconde partie de l'élément d'assemblage selon la présente invention.

Le second profilé 335 est un profilé de section rectangulaire en aluminium. Le profilé 335 possède à une première extrémité 336 une rainure 337 débouchant sur une deuxième rainure 338, les rainures 337 et 338 s'étendant sur toute la longueur du second profilé. Les rainures 337 et 338 comportent des pattes respectivement 337a et 337b, et 338a et 338b. A son autre extrémité 339, le profilé 335 possède une rainure de forme sensiblement cylindrique 340 s'étendant sur toute la longueur du profilé. Accolée à la rainure 340 se trouve une autre rainure de section rectangulaire 341 débouchant sur la cavité formée par la rainure 340. La rainure 341 possède des pattes 341a et 341b situées au niveau où la rainure 341 débouche dans la cavité de la rainure 340. Une cavité interne 342 de section en forme de T est accolée à la rainure 341. Entre la cavité interne 342 et la rainure 338, il se trouve une cavité 344 de section rectangulaire et perpendiculaire à la cavité 342 qui est configurée pour recevoir la seconde partie 209 de l'élément d'assemblage 206.

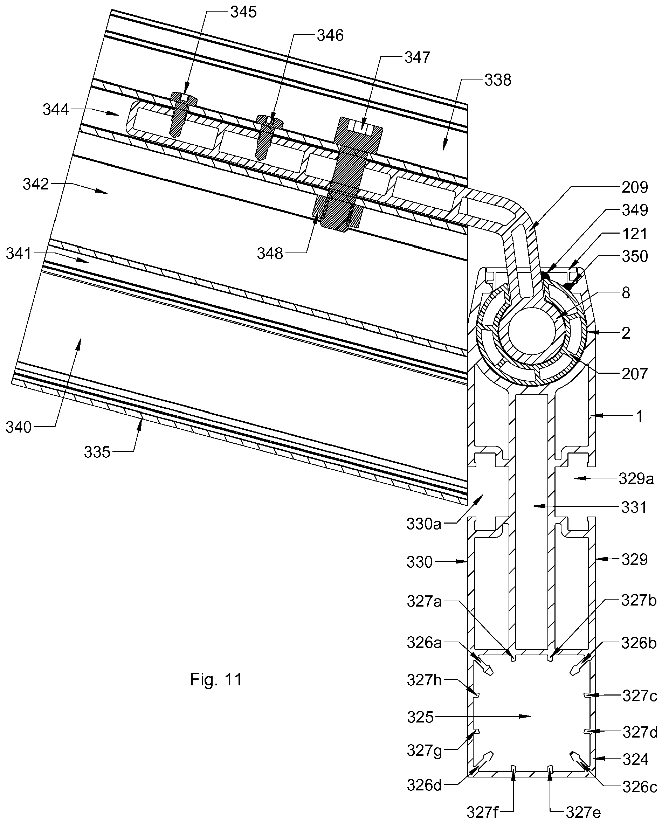

Tel que représenté dans la Figure 11, la seconde partie 209 de l'élément d'assemblage 206 est introduite dans l'espace de réception 344 du second profilé 335. Afin de fixer la seconde partie 209 au profilé, on va visser la seconde partie 209 au profilé 335 au niveau de la rainure 338 par deux vis 345 et 346. De plus on boulonne la seconde partie 209 au profilé 335 par l'intermédiaire d'une vis 347 qui passe dans la rainure 338 et d'un écrou 348 qui est situé dans la cavité 342, si cela est nécessaire.

Le montage de la rotule dans le premier profilé est identique à celui décrit précédemment. On peut rajouter des points de colle ou des joints en silicone 349 et 350 pour éviter les micro-mouvements crées par les jeux entre les éléments du kit d'assemblage. Le point de colle/joint de silicone 349 est disposé entre la clé 207 et la seconde partie 209 de l'élément d'assemblage 206, et le point de colle/joint de silicone 350 entre la clé 207 et la languette 4b du premier profilé 1.

Si l'on se réfère désormais aux Figures 13a à 13c, on peut voir que l'on a représenté des secondes parties 209, 209' et 209" de l'élément d'assemblage 206 qui présentent un angle variable à plat par rapport au premier profilé. L'angle peut être droit telle que représenté pour la seconde partie 209 sur la Figure 13b, la seconde partie 209 faisant saillie perpendiculairement au bord longitudinal du premier profilé. L'angle peut également être plus fermé tel que représenté pour les secondes parties 209' et 209" représentées respectivement sur les Figures 13a et 13c, l'angle 209' étant fermé vers la gauche et l'angle 209" étant fermé vers la droite. Bien entendu les secondes parties 9 des dispositifs d'assemblage 5 et 105 peuvent également présenter de tels angles.

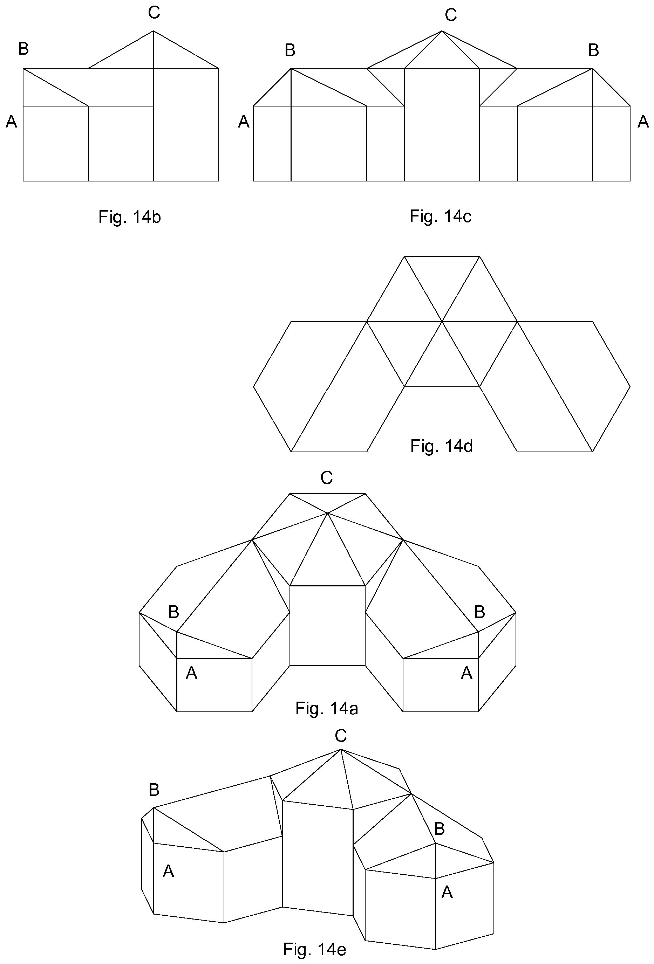

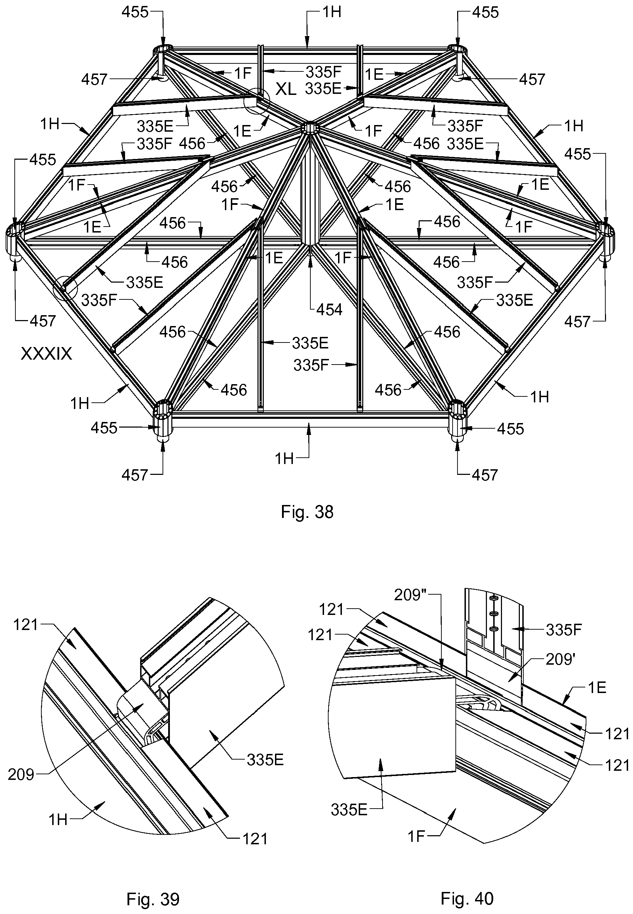

On va maintenant se référer aux Figures 14a à 40, dans lesquelles on a représenté une structure de maison dont les éléments de l'ossature seront en partie assemblés à l'aide des kits d'assemblage de la présente invention.

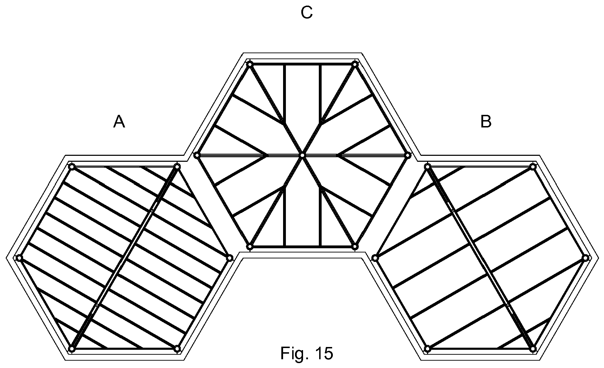

La maison montrée dans les Figures 14a à 14e et 15 possède une ossature d'éléments en aluminium et une enveloppe extérieure. La maison comprend plusieurs niveaux et des toitures. La maison possède également des éléments de plancher. On va décrire plus particulièrement par la suite le montage de l'angle de plancher A, de l'angle de toiture B et de l'angle de toiture C indiqués sur la Figure 14a.

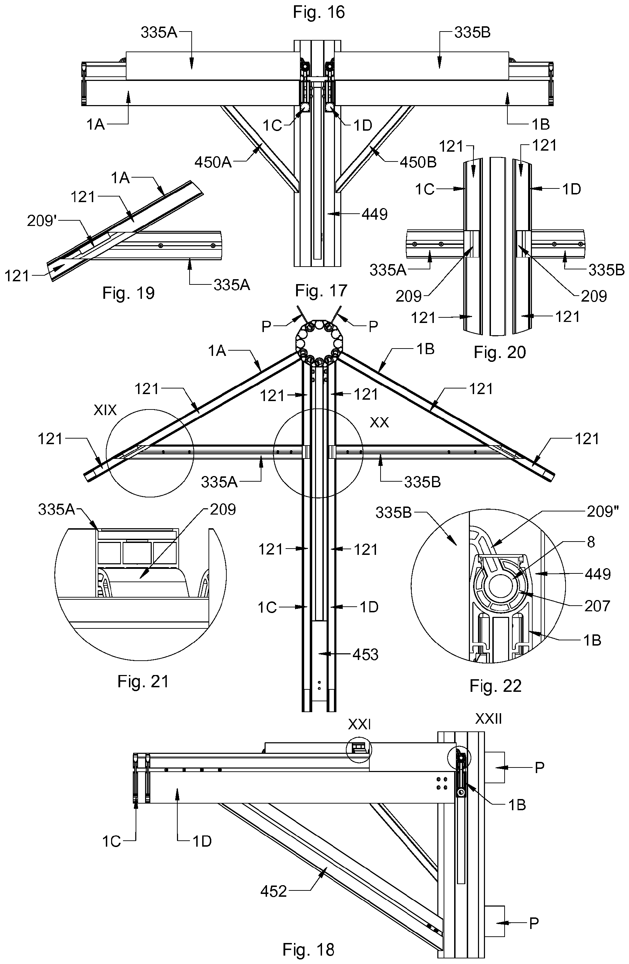

Si l'on se réfère aux Figures 16 à 24, on peut voir que l'on a représenté l'angle de plancher A de la Figure 14a et les éléments qui le constituent.

L'angle de plancher A comprend un poteau 449. Ce poteau est un profilé en aluminium dodécagonal.

A partir du poteau 449, partent deux traverses horizontales latérales 1A et 1B ainsi que deux traverses horizontales principales 1C et 1D. Ces traverses sont des premiers profilés 1 tels que décrits dans les Exemples précédents. Ces traverses seront assemblées au poteau 449 à l'aide d'un système d'assemblage non décrit ici.

Les traverses horizontales latérales 1A et 1B sont soutenues par un contreventement respectif 450A et 450B. Chaque contreventement sera fixé au poteau 449 et au niveau de chaque traverse horizontale dans l'espace de réception interne 325 par un système d'assemblage similaire à celui utilisé pour la fixation des traverses au poteau et non décrit ici. Ces mêmes systèmes d'assemblage peuvent être utilisés pour assembler une enveloppe du bâtiment à son ossature grâce à des plaques P.

Les traverses horizontales principales 1C et 1D sont soutenues par un contreventement 452 fixé au poteau 449 à l'aide d'un système similaire à celui des traverses qu'il soutient. Une platine de blocage 453 sera introduite dans la rainure 329a du profilé 1C et la rainure 330a du profilé 1B. Le contreventement 452 viendra en butée contre la platine de blocage 453 afin de reprendre les charges supportées par les traverses horizontales principales 1C et 1D.

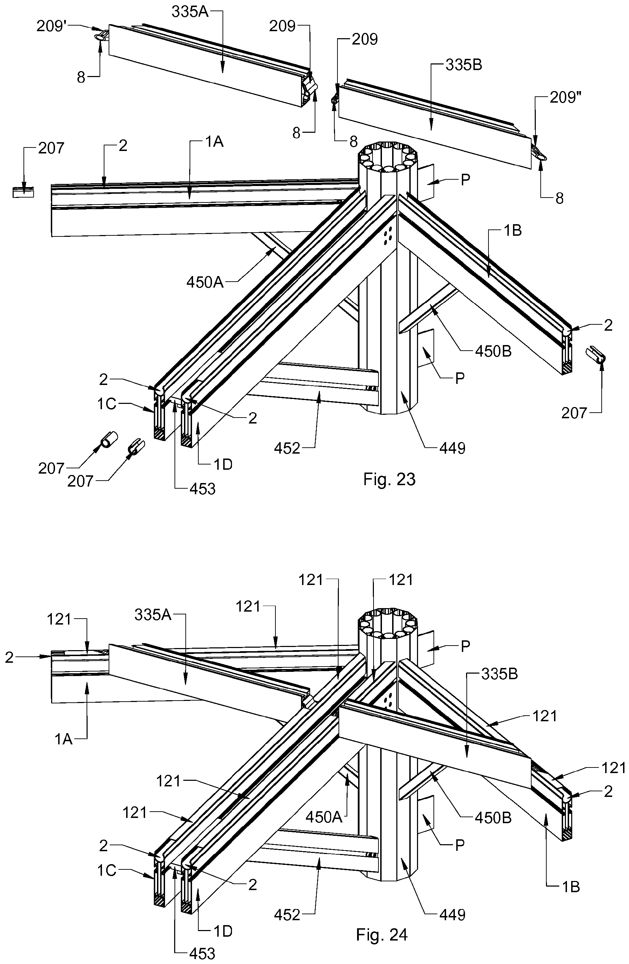

On va maintenant décrire le montage des traverses de plancher 335A et 335B aux traverses horizontales latérales et principales 1A, 1B, 1C et 1D en faisant référence en particulier aux Figures 23 et 24.

Les traverses de plancher 335A et 335B sont toutes deux des seconds profilés 335 tels que décrits dans les Exemples précédents. On va tout d'abord insérer les cales temporaires 332 et les clés 207 dans les rainures 2 de chaque traverse horizontale 1A, 1B, 1C et 1D.

La traverse de plancher 335A sera assemblée à la traverse horizontale latérale 1A et à la traverse horizontale principale 1C. A son extrémité devant être assemblée à la traverse horizontale 1A, la traverse de plancher 335A possède un élément d'assemblage ayant une seconde partie 209' et à son extrémité devant être assemblée à la traverse horizontale 1C, elle possède un élément d'assemblage ayant une seconde partie 209. On peut alors disposer les rotules 8 de chaque élément d'assemblage aux extrémités de la traverse de plancher dans les cales temporaires correspondantes de chaque traverse horizontale, tel que décrit dans les Exemples précédents. Puis on fera glisser chaque clé afin de venir remplacer la cale temporaire correspondante, tel que décrit dans les Exemples précédents. Une fois que les rotules seront en position dans les clés, on pourra venir fermer l'ouverture de chaque traverse par les capots 121 de part et d'autre de la seconde partie faisant saillie de ladite ouverture.

La traverse de plancher 335B sera assemblée à la traverse horizontale latérale 1B et à la traverse horizontale principale 1D. A son extrémité devant être assemblée à la traverse horizontale 1B, la traverse de plancher 335B possède un élément d'assemblage ayant une seconde partie 209" et à son extrémité devant être assemblée à la traverse horizontale 1D, elle possède un élément d'assemblage ayant une seconde partie 209. La traverse de plancher 335B sera assemblée de la même manière que la traverse de plancher 335A.

On pourra utiliser n'importe quel dispositif d'assemblage des kits d'assemblage selon la présente invention, pour le montage des éléments de l'angle de plancher A. Cependant, les dispositifs d'assemblage que l'on pourra utiliser pour le montage des éléments horizontaux seront en particulier les dispositifs d'assemblage 105 ou 205 décrits ci-dessus, la clé des dispositifs d'assemblage n'ayant pas besoin d'être bloquée en translation autrement que par la fermeture des ouvertures des profilés par les capots.

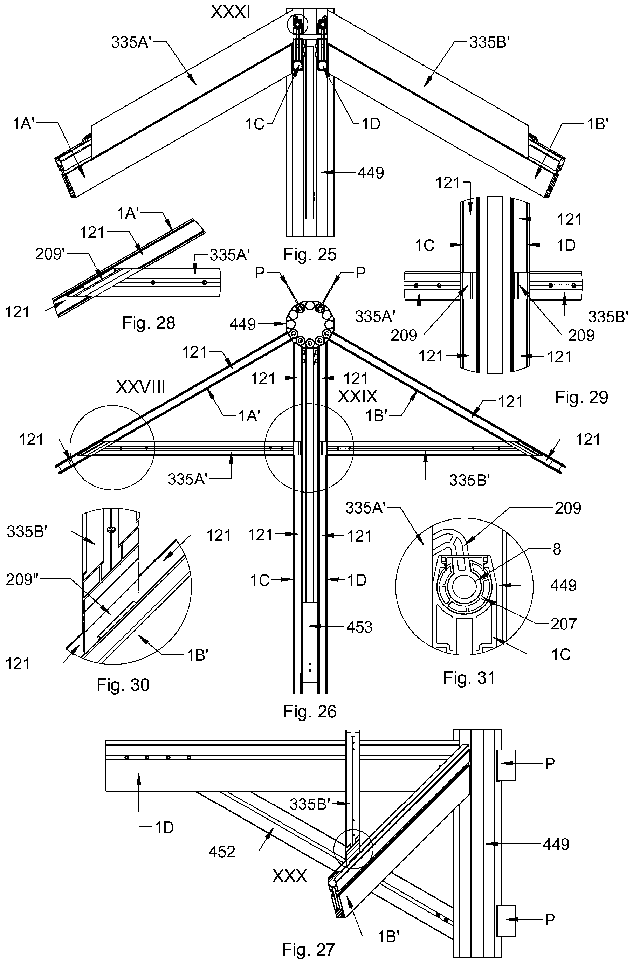

Si l'on se réfère aux Figures 25 à 33, on peut voir que l'on a représenté l'angle de toiture B de la Figure 14a et les éléments qui le constituent.

De la même manière que pour l'angle de plancher A de la structure de maison, l'angle de toiture possède un poteau 449 qui est identique au poteau utilisé pour l'angle de plancher A. A partir de ce poteau, partent deux traverses horizontales principales 1C et 1D qui sont identiques à celles décrites ci-dessus pour l'angle de plancher. Le montage de ces traverses est identique à celles de l'angle de plancher A. De la même manière, ces traverses horizontales seront soutenues par un contreventement 452 venant en butée contre la platine 453 insérée dans les rainures des traverses 1C et 1D.

Afin de réaliser un toit en pente, les traverses horizontales latérales de l'angle de plancher seront remplacées par des traverses latérales 1A' et 1B'. Ces traverses latérales 1A' et 1B' sont des premiers profilés 1 tels que décrits précédemment. Ces traverses latérales seront assemblées au poteau 449 par un système d'assemblage non décrit ici. Les traverses 335A' et 335B' forment un angle aigu avec le poteau 449, et étant donné que les charges sont moins importantes pour une toiture, ces traverses ne seront pas soutenues par un contreventement.

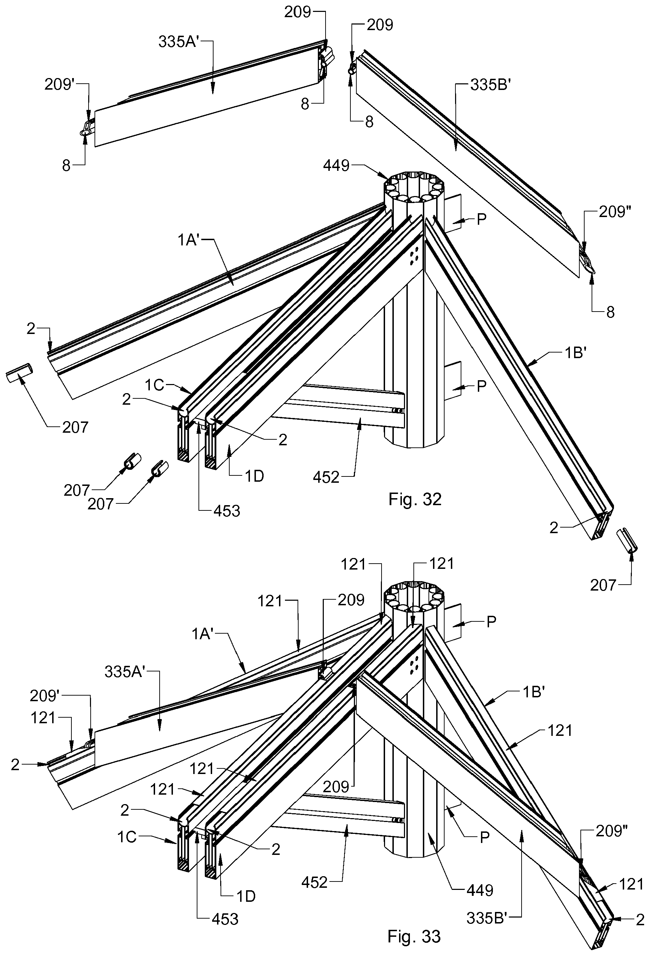

On va maintenant décrire le montage des traverses de toiture 335A' et 335B' aux traverses horizontales latérales et principales 1A', 1B', 1C et 1D en faisant référence en particulier aux Figures 32 et 33.

Les traverses de toiture 335A' et 335B' sont des seconds profilés 335 tels que décrits précédemment. De la même manière que pour l'angle de plancher, on va tout d'abord insérer les cales temporaires 332 et les clés 207 dans les rainures 2 de chaque traverse horizontale 1A', 1B', 1C et 1D.

La traverse de toiture 335A' sera assemblée à la traverse latérale 1A' et à la traverse horizontale principale 1C. A son extrémité devant être assemblée à la traverse 1A', la traverse de toiture 335A' possède un élément d'assemblage ayant une seconde partie 209' et à son extrémité devant être assemblée à la traverse horizontale 1C, elle possède un élément d'assemblage ayant une seconde partie 209. Afin de former une traverse de toiture, la seconde partie 209 de la traverse 335A' possède un angle relativement fermé de sorte à former un chevron. L'insertion de la traverse 335A' dans la traverse latérale 1A' et la traverse horizontale principale 1C sera effectuée de la même manière que décrite précédemment. Les ouvertures des traverses seront ensuite fermées par des capots 121.

La traverse de toiture 335B' sera assemblée à la traverse latérale 1B' et à la traverse horizontale principale 1D. A son extrémité devant être assemblée à la traverse 1B', la traverse de toiture 335B' possède un élément d'assemblage ayant une seconde partie 209" et à son extrémité devant être assemblée à la traverse horizontale 1D, elle possède un élément d'assemblage ayant une seconde partie 209. Afin de former une traverse de toiture, la seconde partie 209 de la traverse 335B' possède un angle relativement fermé de sorte à former un chevron. Le montage de la traverse de toiture puis la fermeture des ouvertures sont effectués de la même manière que précédemment pour la traverse de toiture 335A'.

On pourra utiliser n'importe quel dispositif d'assemblage selon la présente invention, pour le montage des éléments de l'angle de toiture. Cependant, le dispositif d'assemblage que l'on pourra utiliser pour le montage des extrémités des traverses de toiture venant dans les traverses latérales non horizontales pourra en particulier être le dispositif d'assemblage 5 décrit ci-dessus, les vis de la clé 7 permettant de supprimer efficacement sa translation. On pourra également utiliser les deux autres dispositifs d'assemblage 105 et 205 en fixant leur clé respective à l'aide de points de colle ou de silicone.

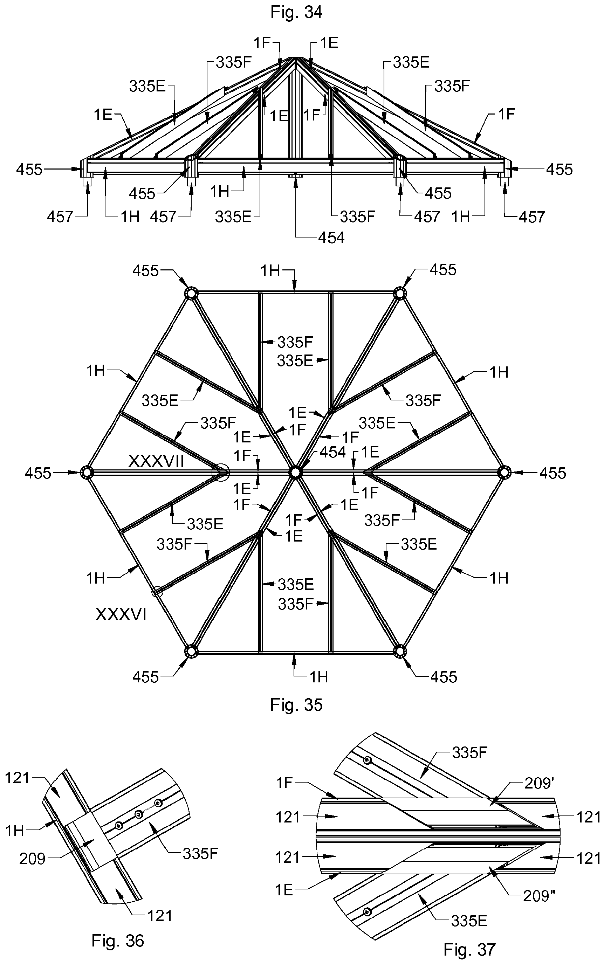

Si l'on se réfère aux Figures 34 à 40, on peut voir que l'on a représenté l'angle de toiture C de la Figure 14a et les éléments qui le constituent.

L'angle de toiture C est constitué d'un poteau central 454 ainsi que de six poteaux périphériques 455. Les poteaux 454 et 455 sont tous des profilés dodécagonaux en aluminium tels que ceux utilisés, par exemple, pour l'angle de plancher. Les six poteaux périphériques 455 forment un hexagone régulier dont chaque poteau occupe un sommet. Le poteau central 454 occupe le centre de l'hexagone formé par les poteaux périphériques 455. Les poteaux périphériques 455 sont reliés l'un à l'autre par une traverse horizontale 1H qui est un premier profilé 1. Le poteau central 454 est relié à chacun des poteaux périphériques 455 à deux reprises. A son extrémité supérieure le poteau central est relié à chaque poteau périphérique par deux traverses inclinées 1E et 1F qui sont des premiers profilés 1. L'extrémité supérieure des poteaux périphériques 455 est biseautée afin d'être alignée avec le bord supérieur des traverses inclinées. A son extrémité inférieure, le poteau central 454 est relié à chaque poteau périphérique 455 par des traverses horizontales 456. L'assemblage des traverses et des poteaux se fera à l'aide d'un système d'assemblage non décrit ici.

Chaque poteau périphérique 455 est doté d'une entretoise 457 de type tube cylindrique qui permettra à ce que la toiture formée par l'ensemble de l'angle de toiture C soit assemblée au niveau directement au-dessous de la toiture de la structure de maison.

Afin de réaliser la toiture, on va venir assembler une pluralité de traverses de toiture. Ces traverses sont des seconds profilés 335. Les traverses 335E sont destinées à relier une traverse horizontale 1H reliant deux poteaux périphériques consécutifs à la traverse 1E étant l'une des traverses reliant un poteau périphérique 455 au sommet du poteau central 454. De la même façon, les traverses 335F relient une traverse horizontale 1H et l'autre traverse reliant un poteau périphérique 455 au sommet du poteau central 454, la traverse 1F.

Les traverses 335E possèdent à leur extrémité devant être assemblée aux traverses horizontales 1H un élément d'assemblage ayant une seconde partie 209 et à leur extrémité devant être assemblée aux traverses 1E un élément d'assemblage ayant une seconde partie 209' formant un chevron d'angle plus fermé. De la même manière, les traverses 335F possèdent à leur extrémité devant être assemblée aux traverses horizontales 1H un élément d'assemblage ayant une seconde partie 209 et à leur extrémité devant être assemblée aux traverses 1F un élément d'assemblage ayant une seconde partie 209" formant un chevron d'angle plus fermé.

Le montage des traverses 1E et 1F se fera de la même manière que décrite précédemment. Les ouvertures des traverses 1H pourront être fermées par des capots de la même manière que précédemment décrite. Les ouvertures des traverses 1E et 1F seront fermées par des profilés spéciaux non représentés ici. Ces profilés de fermeture seront dotés d'une première extrémité qu'on pourra venir insérer dans la rainure des traverses 1E et 1F. La seconde extrémité de ce profilé sera constituée par des éléments similaires à ceux de la partie supérieure des seconds profilés 335 afin que ces profilés de fermeture aient une empreinte extérieure identique aux traverses 335F. En faisant ainsi, les traverses de toiture et les profilés de liaison seront au même plan, et auront une interface identique qui pourra recevoir une interface de liaison avec l'enveloppe de toiture de la maison.

On pourra utiliser n'importe quels dispositifs d'assemblage selon la présente invention pour le montage des éléments de l'angle de toiture C. Cependant, on pourra utiliser en particulier le dispositif selon le premier mode de réalisation pour l'assemblage dans les traverses inclinées 1E et 1F afin de bloquer plus facilement la translation de la clé. Pour le montage dans les traverses horizontales, n'importe quel mode de réalisation des dispositifs d'assemblage pourra être utilisé.

## Revendications

1. - Kit d'assemblage pour structure de support, comprenant au moins un premier profilé (1), au moins un second profilé (335) destiné à s'étendre perpendiculairement ou suivant un angle par rapport à un premier profilé (1) et au moins un dispositif d'assemblage (5 ; 105 ; 205) destiné à assembler une extrémité d'un second profilé (335) à un premier profilé (1), le kit d'assemblage étant **caractérisé par le fait que** :
- dans chaque premier profilé (1) est formée une rainure (2) ouverte, à fond cylindrique et débouchante à ses deux extrémités, la largeur de l'ouverture (3) de ladite rainure (2) étant inférieure au diamètre du fond cylindrique de ladite rainure (2) ;
- chaque second profilé (335) présente à au moins l'une de ses extrémités un espace de réception (344) ; et
- chaque dispositif d'assemblage (5 ; 105 ; 205) comprend :
- un élément d'assemblage (6 ; 206) présentant une première partie (8), dite rotule, configurée pour être reçue dans la rainure (2) d'un premier profilé (1), et une seconde partie (9 ; 209) s'étendant à partir de ladite rotule (8) de façon à faire saillie hors dudit premier profilé (1) en position d'assemblage et configurée pour être reçue dans l'espace de réception (344) d'un second profilé (335) et y être fixée, ladite rotule (8) étant cylindrique avec un diamètre extérieur plus petit que la largeur de l'ouverture (3) du premier profilé (1) ;
- une pièce (7 ; 107 ; 207), dite clé, se présentant sous la forme d'un tube cylindrique creux, fendu longitudinalement, le diamètre extérieur de la clé (7 ; 107 ; 207) étant tel que ladite clé puisse être introduite sans jeu ou pratiquement sans jeu dans la rainure (2), le diamètre extérieur de la rotule (8) étant tel que ladite rotule (8) puisse être contenue dans la clé (7 ; 107 ; 207) et la largeur maximale de la fente (10 ; 110 ; 210) étant inférieure au diamètre extérieur de la rotule (8) ;
ledit kit comportant également une cale temporaire (332), laquelle se présente sous la forme d'un tube creux semi-cylindrique ou en partie de cylindre dont le diamètre extérieur est tel qu'elle peut être introduite dans la rainure (2) d'un premier profilé pour reposer contre le fond de cette dernière et dont le diamètre intérieur est tel que la rotule (8) peut être reçue dans ladite cale temporaire (332) en place dans le fond de la rainure (2), les dimensions de ladite cale (332) étant également telles que, dans la position où la rotule (8) repose sur elle, la cale (332) peut être extraite par une extrémité du premier profilé ou par l'ouverture (3) de celui-ci.

2. - Kit d'assemblage selon la revendication 1, **caractérisé par le fait qu'**il comporte des moyens de blocage en translation et /ou en rotation de la clé (7 ; 107 ; 207) dans la rainure (2).

3. - Kit d'assemblage selon la revendication 2, **caractérisé par le fait que** les moyens de blocage de la clé (7) sont des moyens de blocage en translation et consistent en au moins une vis de serrage (17a, 17b) introduite dans un trou traversant (16a, 16b) de la clé (7) et venant en appui contre la rotule (8), immobilisant alors celle-ci ainsi que la clé (7).

4. - Kit d'assemblage selon la revendication 2, **caractérisé par le fait que** les moyens de blocage de la clé (107) sont des moyens de blocage en rotation, la clé (107) comprenant deux languettes longitudinales (118a ; 119a), dites d'arrêt, s'étendant chacune vers l'extérieur dans le prolongement d'un bord longitudinal respectif (118 ; 119) de la fente (110) de la clé (107), ladite fente (110) étant alors évasée et étant par ailleurs dimensionnée de telle sorte qu'une fois la clé (107) introduite dans la rainure (2) d'un premier profilé (1), chaque languette d'arrêt (118a ; 119a) est en contact avec le bord longitudinal libre d'une languette d'appui (4a ; 4b) qui s'étend le long de la rainure (2) d'un premier profilé au voisinage d'un bord supérieur (3a ; 3b) correspondant de la rainure, la mise en butée de chaque languette d'arrêt (118a ; 119a) sur la languette d'appui (4a ; 4b) respective assurant le blocage en rotation de la clé, un pivotement de la rotule (8) autour de son axe longitudinal à l'intérieur de la clé (107) étant autorisé.

5. - Kit d'assemblage selon la revendication 2, **caractérisé par le fait que** des moyens sont prévus pour éviter des micro-mouvements entre l'élément d'assemblage (206) et la clé (207) d'une part et entre la clé (207) et le premier profilé (1) d'autre part, lesdits moyens pouvant consister en au moins un point de colle ou de silicone entre la surface extérieure de la clé (207) et la surface extérieure de l'élément d'assemblage (206) au voisinage de la fente (210) pour bloquer les micro-mouvements entre l'élément d'assemblage (206) et la clé (207), et/ou entre la surface extérieure de la clé et au moins une languette d'appui (4a , 4b) qui s'étend le long de la rainure (2) d'un premier profilé (1) au voisinage d'un bord supérieur correspondant de la rainure (2) pour bloquer les micro-mouvements entre la clé (207) et le premier profilé (1).

6. - Kit d'assemblage selon l'une des revendications 1, 2, 3 et 5, **caractérisé par le fait que** la largeur de la fente (10 ; 210) est telle que la seconde partie de l'élément d'assemblage traverse ladite fente sans jeu ou pratiquement sans jeu en position d'assemblage.

7. - Kit d'assemblage selon l'une des revendications 1 à 6, **caractérisé par le fait qu'**il comprend en outre au moins un capot (121) apte à venir fermer l'ouverture (3) de la rainure (2) d'un premier profilé (1) dans sa partie ne comportant pas le dispositif d'assemblage, bloquant alors ce dernier en translation dans la rainure (2).

8. - Kit d'assemblage selon la revendication 7, **caractérisé par le fait que**
- chaque capot (121) se présente sous la forme d'une plaque plane apte à être montée en travers de l'ouverture (3) de la rainure (2) d'un premier profilé (1), la largeur de la plaque étant légèrement inférieure à la largeur de l'ouverture (3) de la rainure (2), deux pattes d'appui s'étendant vers le bas à partir de la face inférieure de la plaque, chaque patte d'appui étant située au voisinage d'une extrémité respective de la plaque ; et
- deux languettes longitudinales (4a et 4b), dites d'appui, s'étendent le long de la rainure (2) de chaque premier profilé (1), chacune au voisinage d'un bord respectif supérieur (3a ; 3b) de la rainure, chaque languette d'appui (4a ; 4b) présentant une face supérieure horizontale contre laquelle prend appui une patte d'appui d'un capot (121) lorsque ce dernier est monté en travers de l'ouverture (3) de la rainure (2).

9. - Kit d'assemblage selon l'une des revendications 1 à 8, **caractérisé par le fait que** la seconde partie (9 ; 209) de l'élément d'assemblage (6 ; 206) est coudée.

10. - Kit d'assemblage selon l'une des revendications 1 à 8, **caractérisé par le fait que** le segment de la seconde partie (9 ; 209) de l'élément d'assemblage (6 ; 206) voisin de la rotule a une ligne longitudinale moyenne perpendiculaire à ou formant un angle non droit avec l'axe longitudinal de la rotule.

11. - Procédé d'assemblage d'une structure de support à l'aide d'au moins un kit d'assemblage selon l'une des revendications 1 à 10, **caractérisé par le fait que** :
• on prévoit au moins un premier profilé (1), au moins un second profilé (335) et au moins un dispositif d'assemblage (5 ; 105 ; 205) devant constituer la structure recherchée, une cale temporaire (332) étant associée à chaque dispositif d'assemblage (5 ; 105 ; 205) ;
• on place chaque cale temporaire (332) dans la rainure (2) du premier profilé (1) ou dans les rainures (2) des premiers profilés (1) à l'emplacement où l'on veut former la liaison avec le second profilé (335) ;
• on insère un élément d'assemblage (6 ; 206) par l'extrémité de sa seconde partie (9 ; 209) dans l'espace de réception (344) formé à une extrémité ou à chaque extrémité du second profilé (335) ;
• on vient faire reposer la rotule (8) ou chaque rotule (8) sur la cale temporaire (332) placée dans la rainure (2) du premier profilé (1) ;
• on vient insérer la clé (7 ; 107 ; 207) dans la rainure (2) du premier profilé (1) en dehors de l'endroit où se trouvent la cale temporaire (332) et la rotule (8) ;
• on fait coulisser la clé (7 ; 107 ; 207) dans la rainure (2) de telle sorte qu'elle vient pousser la cale temporaire (332) et prendre la place de cette dernière sous la rotule (8) ; et
• on fait sortir la cale temporaire (332) par l'ouverture (3) du premier profilé (1) ou par l'extrémité de celui-ci ;
• le cas échéant, on vient fermer l'ouverture (3) de la rainure (2) par au moins un capot (121),
ces opérations étant recommencées pour chacune des positions d'assemblage.

12. - Structure de support, **caractérisée par le fait qu'**elle comprend une pluralité de kits d'assemblage selon l'une des revendications 1 à 10, à l'état assemblé, sans la ou les cales temporaires (332).

13. - Structure de support selon la revendication 12, **caractérisée par le fait qu'**elle compose un plancher ou une toiture, comprenant une pluralité de premiers profilés (1), placés à l'horizontale, une pluralité de seconds profilés (335) s'étendant chacun perpendiculairement ou de façon inclinée entre deux premiers profilés (1), et une pluralité de dispositifs d'assemblage (5 ; 105 ; 205) assemblant chacun une extrémité longitudinale d'un second profilé (335) au premier profilé (1) respectif.
